# EUROPEAN PATENT SPECIFICATION

(11) **EP 2 609 842 B1**
(45) Date of publication and mention of the grant of the patent: **31.12.2014**
(21) Application number: 12194230.4
(22) Date of filing: 26.11.2012
(51) Int. Cl.: A47J 45/07

(54) **Demountable handle and pan having the same**
Abnehmbarer Griff und Pfanne damit
Poignée démontable et poêle ayant celle-ci

(30) Priority: 30.12.2011 CN 201120568174 U
(43) Date of publication of application: 03.07.2013
(73) Proprietor: Hu, Chengshao, 321306 Zhejiang Province Zhejiang (CN)
(72) Inventor: Hu, Chengshao, 321306 Zhejiang Province Zhejiang (CN)
(74) Representative: Fiesser, Gerold Michael

(56) References cited:
- CN-U- 201 492 301
- CN-U- 201 759 431
- FR-A3- 2 789 874
- US-A- 4 577 367

## Description

### Field of Invention

The creation relates to handle, and relates to a demountable handle and a pan having the same particularly.

### Background of Invention

Handles in the prior art are generally screwed on a host and fixed, such as on a pan, and they are non-demountable, which leads to inconvenience in transportation, replacement and maintenance.

US Patent No. US4577367A (Detachable handle including a spring-biased pivoting locking member) disclosed a device for fitting and locking a handle to the body of a kitchen utensil. A button 22 and a lever 15 are contained, separately with a fixed pin 16 (or 19), wherein, the pin 6 is mounted in its middle region. Along with the movement back and forth of the button, one end of the lever 15 is forced to swing the other end of the lever 15 up and down, with a fixed point formed by the pin 16 at its middle region.

FR Patent Application No. FR2789874A3 (Removable handle for kitchen utensils slides over sleeve attached to utensil and is held in place by spring-loaded lever attached to pinwhich fits into hole in sleeve) disclosed a coil spring 28, wherein the handle is held in place by a spring-loaded lever which is attached at its other end to a pin (27) which fits into a hole (11) in the sleeve. The coiling spring 28 and the block 27 are at different ends of the button. In order to insert or pull out the component 1, the button 26 must be pressed all the time during the inserting or pulling out. However, because of the throwing portion containing a concave end in the present application, the holding of the button 26 (or the throwing portion) is unnecessary.

Chinese Patent Application No. CN201492301 U (Pressure casting pan with detachable pan handle) disclosed a L-shaped press-plate 4 comprising a pan handle. The end portion of the pan handle is provided with a connecting hole which is capable of accommodating the connecting plate of the pan lug to enter into; the upper surface of the connecting hole is provided with a pressing plate which is in an L shape; the middle portion of the pressing plate is connected to the pan handle via a pin shaft; a press-fit surface contacting with the connecting plate is provided with a tooth shape matched with that of the tooth-shaped surface of the connecting plate; and the other end of the pan handle is a rotary handle.

Furthermore, Chinese Patent Application No. CN201759431 U (Detachable panhandle) also disclosed that the coiling spring 5 is at the underneath of the block 4. A button is pressed for pushing down the block. However, for preventing the unexpected movement of the block 4, a fastener 8 will be contained on the block 4. Accordingly, a slot 7 will be contained in the insertion piece 10 into which fastener 8 inserts to control the block 4. However, normally, the connection of the fastener 8 with slot 7 is achieved by the force of the coiling spring 5. If the handle is wanted to be mounted or demounted, the button should be pressed all through the operating. Meanwhile, if the coiling spring 5 perishes and loses its resilience, the handle will easily drop.

### Summary of the Invention

In consideration of this, the technical problem for the creation to be solved is providing a handle which is demountable, transportable, replaceable and maintainable, and a pan having the same.

To serve the purpose, the bellowing solution is provided by the utility model:

A demountable handle is provided by the utility model, which comprises a joint for connection to a host, and a handle to be connected to the joint, a plug is provided on the end of joint connecting to the handle, a groove is formed on the top end of the plug, a cavity is provided in the end of the handle connecting to the joint for the plug to fit in, a control assembly is arranged on the handle to lock at the groove; wherein,the control assembly comprises a resilient device, a locker, a block and a throwing portion which are contacting in sequence from bottom up, the resilient device is mounted between the block and the bottom surface of the cavity, a notch is formed in the part of the plug corresponding to resilient device, a block aperture is provided in the part of the handle corresponding to the block, while a throwing portion aperture is provided in the part of handle corresponding to the throwing portion, the throwing portion aperture contacts one end of the block to press and lock the block in the groove by swing down, and to release the block to elevate concave end, the concave end is connected to the side wall of the throwing portion aperture by a pivot;
wherein, the resilient device is a coil spring.

Preferably, a jack in the bottom surface of the cavity and in the block corresponding to the resilient device is formed to secure the resilient device. A pan having the demountable handle is also provided, including a pan body, wherein, one of the preceding handles is incorporated.

Accordingly, the beneficial effect of this creation is:
In the present application, the control assembly comprises a coil spring. The coil spring is mounted between the block and the bottom surface. The throwing portion contains a concave end which can tightly compress the block and the coiling spring. When the throwing portion is pressed, the concave end presses a block to lock the block in a groove. Therefore, the demountable handle is connected. If the throwing portion is drawn back, the block is elevated from the groove, thus the handle can be demounted.
In view of prior art, the creation allows demountable connection between handle and joint, which is transportable, replaceable and maintainable, by arranging a groove and the control assembly, in particular, during practical operation, the plug is inserted into the cavity of the handle, and by downward pressing, the throwing portion will drive the block downward and locked into the groove, thereby the handle is attached to the joint; As for demounting, a simple pull on the throwing portion will allow the block to be elevated by the coil spring and release the locked groove to disjoin the handle from the joint, easy and convenient.

### Description of the Drawings

Fig 1 shows a first schematic diagram of the structure of a disjoined joint and handle in accordance to the utility model.
Fig 2 shows a second schematic diagram of the sectional view of the disjoined joint and handle in accordance to the utility model.
Fig 3 shows a third schematic diagram of the sectional view of the joined, yet unlocked joint and handle in accordance to the utility model.
Fig 4 shows a fourth schematic diagram of the sectional view of the joined and locked joint and handle in accordance to the utility model.
Fig 5 shows a fifth schematic diagram of the exploded view of the control assembly.
Fig 6 shows a sixth schematic diagram of the 3 dimensional view of the joined and locked joint and handle in accordance to the utility model.
Fig 7 shows a seventh schematic diagram of the 3 dimensional view of the disjoined joint and handle in accordance to the utility model.
Fig 8 shows a sectional view of the disjoined joint and handle in accordance to the utility model.

### Description of the Invention

In order to help people skilled in the art to better understand the features and solution of this utility model, reference can be made to detailed description in combination with the drawings hereinafter.

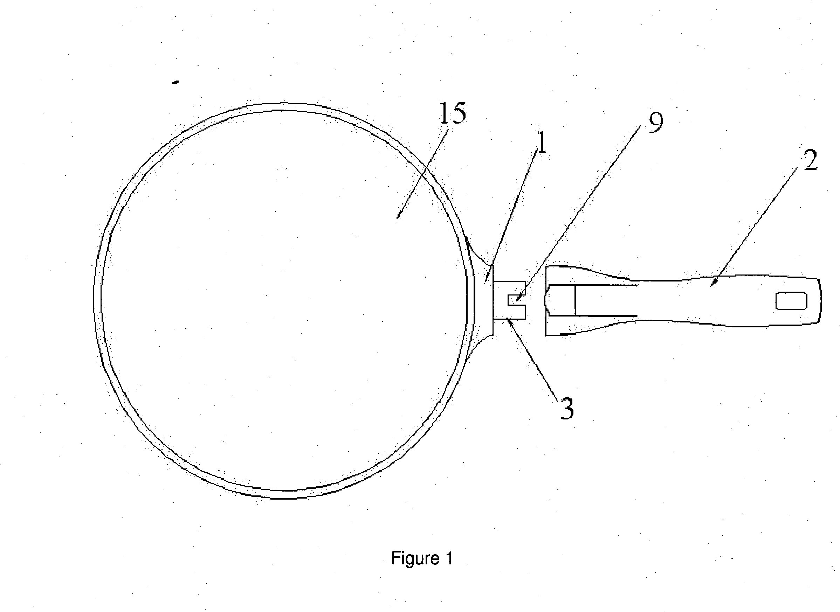

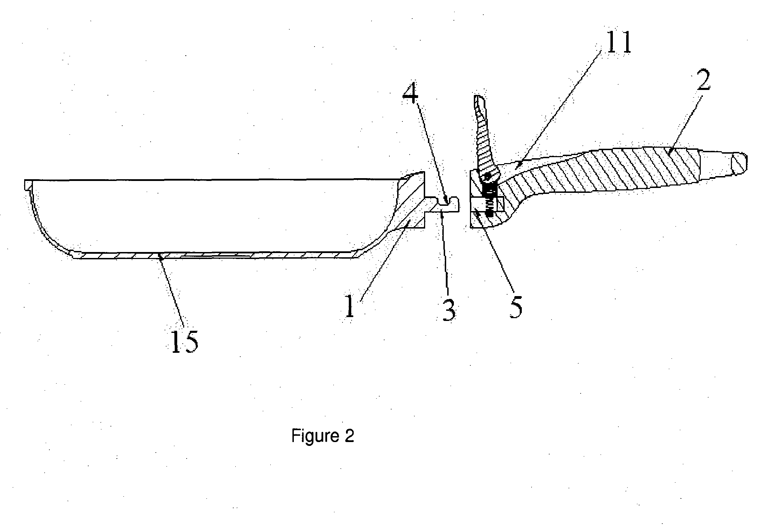

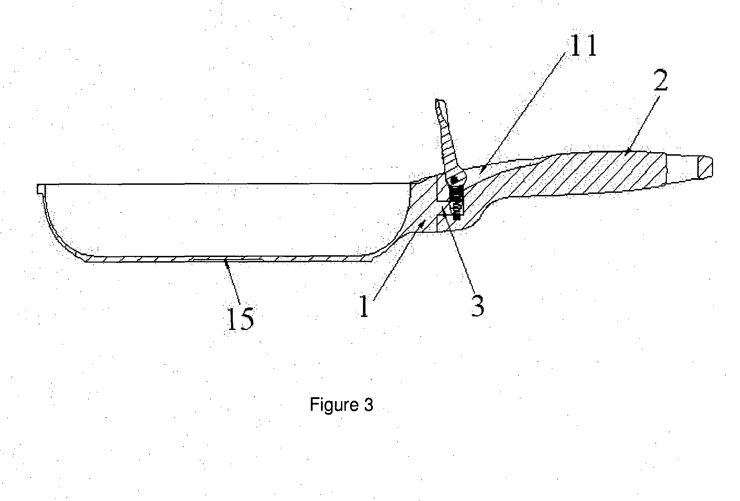

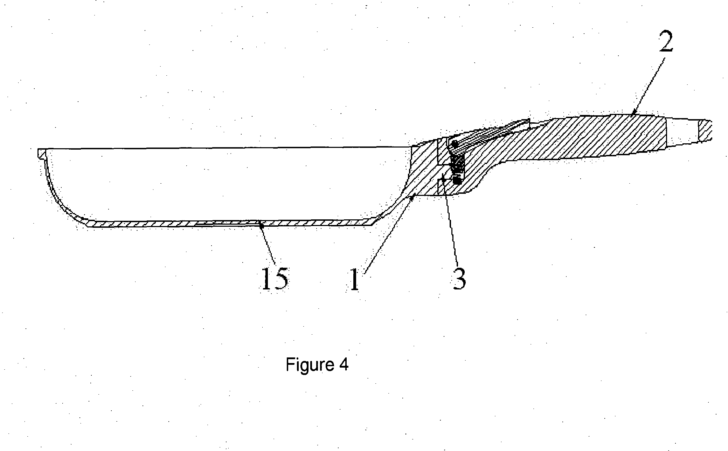

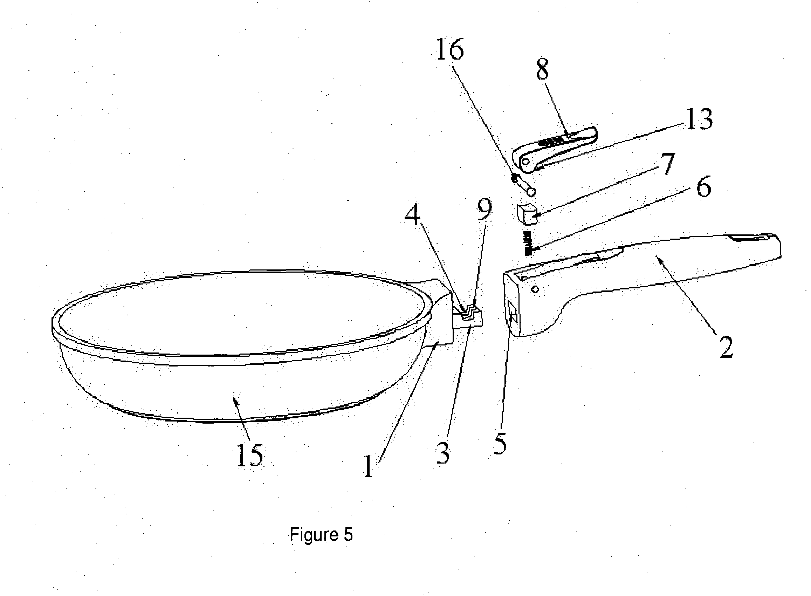

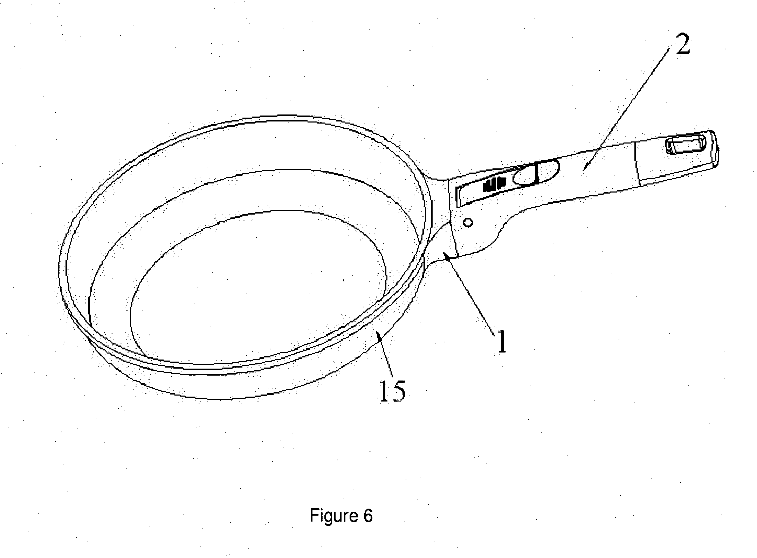

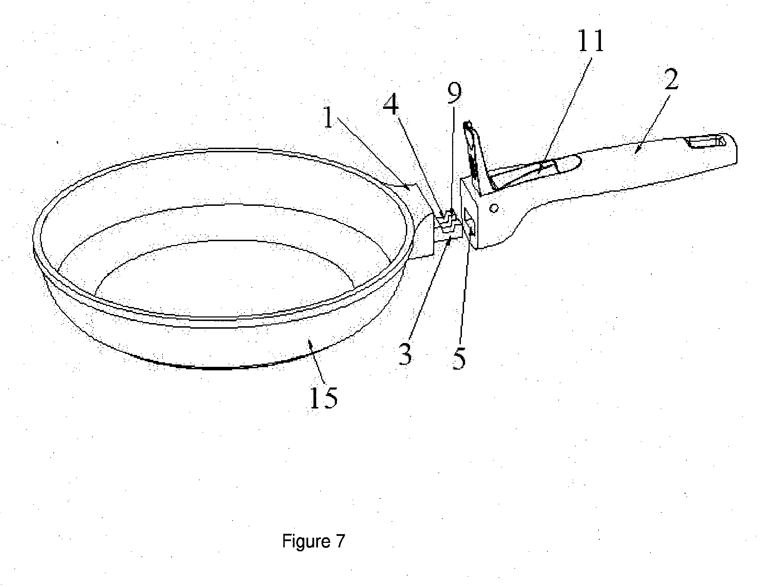

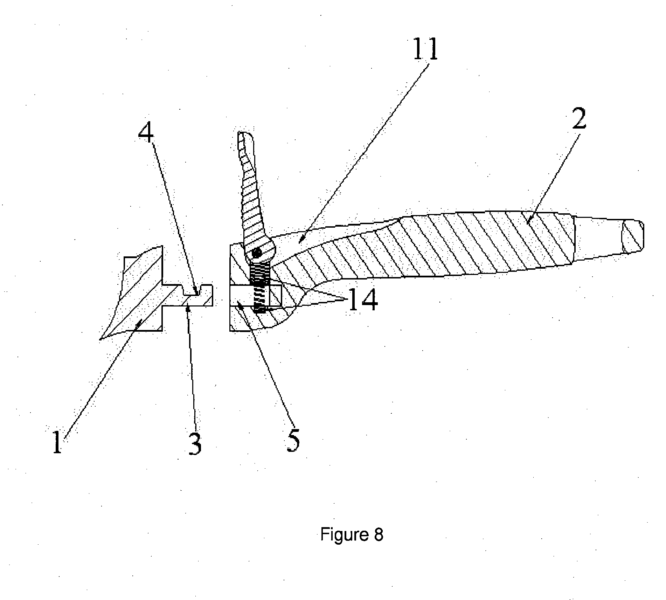

Reference can now be made to Fig 1 to Fig 8, a demountable handle is provided, which comprises a joint 1 for connection to a host and a handle 2 connected to the joint, a plug 3 is provided on the end of joint connecting to the handle, a groove 4 is formed on the top end of the plug, a cavity 5 is provided in the end of the handle connecting to the joint for the plug 3 to fit in, a control assembly is arranged on the handle to lock it at the groove 4.

Wherein, the control assembly comprises a resilient device 6, a block 7 and a throwing portion 8 which are contacting in sequence from bottom up, the resilient device is mounted between the block 7 and the bottom surface of the cavity 5, a notch 9 is formed in the part of the plug 3 corresponding to resilient device, a block aperture 11 is provided in the part of the handle 2 corresponding to the block 7, while a throwing portion aperture is provided in the part of handle 2 corresponding to the throwing portion contacting one end of the block 7 to press and lock the block 7 in the groove 4 by swing down, and to release the block to elevate concave end 13 which is connected to the side wall of the throwing portion aperture by a pivot 16. In the creation a pivot is provided to connect the end of the conclave to the side wall of the throwing portion aperture. A jack 14 in the bottom surface of the cavity 5 and in the block 7 corresponding to the resilient device is formed to secure the resilient device. Preferably the resilient device is a coil spring.

A pan having the demountable handle is also provided by the utility model, which includes a pan body 15, wherein one of the preceding demountable handle is incorporated.

What have been described and illustrated are preferred embodiments of the creation rather restricting it, structural equivalents implementing the solution disclosed herein by the descriptions and drawings shall be deemed fallen into the scope of the claims.

## Claims

1. A demountable handle, comprising: a joint (1) for connection to a host and a handle (2) connected to the handle joint, a plug (3) on the end of joint (1) connecting to the handle (2), a groove (4) on the top end of the plug (3), a cavity (5) in the end of the handle (2) connecting to the joint (1) for the plug (3) to fit in, a control assembly on the handle to lock at the groove (4); wherein, the control assembly comprises a resilient device (6), a locker, a block (7) and a throwing portion (8) which are contacting in sequence from bottom up, the resilient device is mounted between the block (7) and the bottom surface of the cavity (5), a notch (9) is formed in the part of the plug (3) corresponding to the resilient device, a block aperture (11) is provided in the part of the handle (2)
corresponding to the block (7) while a throwing portion aperture is provided in the part of the handle (2) corresponding to the throwing portion contacting one end of the block (7) to press and lock the block (7) in the groove (4) by swing down and to release the block to elevate the concave end (13) which is connected to the side wall of the throwing portion aperture by a pivot (16);
wherein the resilient device is a coil spring.

2. The demountable handle of claim 1, wherein a jack (14) in the bottom surface of the cavity (5) and in the block (7) corresponding to the resilient device is formed to secure the resilient device.

3. A pan having a demountable handle, including a pan body (15), wherein a demountable handle from any one of the handles in claim 1 to claim 2 is incorporated.

## Patentansprüche

1. Abnehmbarer Griff, umfassend: eine Verbindung (1) zum Verbinden mit einer Aufnahme und einem mit der Griffverbindung verbundenen Griff (2), einen Stecker (3) am Ende der Verbindung (1) zum Verbinden mit dem Griff (2), eine Nut (4) am oberen Ende des Steckers (3), einen Hohlraum (5) in dem Ende des Griffs (2) zum Verbinden mit der Verbindung (1), in den der Stecker (3) hineinpasst, eine Bedienanordnung am Griff zum Verriegeln an der Nut (4); wobei die Bedienanordnung eine elastische Vorrichtung (6), eine Verriegelungsvorrichtung, einen Block (7) und einen Schleuderteil (8) umfasst, die sich nacheinander von unten nach oben berühren, die elastische Vorrichtung zwischen dem Block (7) und der Unterseite des Hohlraums (5) angebracht ist, eine Kerbe (9) in dem Teil des Steckers (3) ausgebildet ist, der der elastischen Vorrichtung entspricht, eine Blocköffnung (11) in dem Teil des Griffs (2) vorgesehen ist, der dem Block (7) entspricht, während eine Schleuderteilöffnung in dem Teil des Griffs (2) vorgesehen ist, der dem ein Ende des Blocks (7) berührenden Schleuderteil entspricht, um den Block (7) in die Nut (4) zu drücken und darin zu verriegeln, indem der Block nach unten geschwenkt und freigegeben wird, um das konkave Ende (13), das durch einen Drehzapfen (16) mit der Seitenwand der Schleuderteilöffnung verbunden ist, anzuheben;
wobei die elastische Vorrichtung eine Schraubenfeder ist.

2. Abnehmbarer Griff nach Anspruch 1, wobei eine der elastischen Vorrichtung entsprechende Buchse (14) in der Unterseite des Hohlraums (5) und im Block (7) ausgebildet ist, um die elastische Vorrichtung zu sichern.

3. Pfanne mit einem abnehmbaren Griff, die einen Pfannenkörper (15) aufweist, wobei ein abnehmbarer Griff gemäß einem der Griffe nach Anspruch 1 bis 2 enthalten ist.

## Revendications

1. Manche amovible, comprenant : un joint (1) pour le raccord à un organe de réception et un manche (2) raccordé au joint de manche, un élément d'accouplement femelle (3) sur l'extrémité du joint (1) se raccordant au manche (2), une gorge (4) sur l'extrémité supérieure de l'élément d'accouplement femelle (3), une cavité (5) dans l'extrémité du manche (2) se raccordant au joint (1) destinée à recevoir l'élément d'accouplement femelle (3), un ensemble de commande sur le manche permettant d'effectuer un verrouillage au niveau de la gorge (4) ;
l'ensemble de commande comprenant un dispositif élastique (6), un dispositif de verrouillage, un bloc (7) et une partie d'éjection (8) qui se trouvent en contact dans cet ordre du bas vers le haut, le dispositif élastique étant installé entre le bloc (7) et la surface inférieure de la cavité (5), une encoche (9) étant formée dans la partie de l'élément d'accouplement femelle (3) correspondant au dispositif élastique, une ouverture pour le bloc (11) étant prévue dans la partie du manche (2) correspondant au bloc (7) tandis qu'une ouverture pour la partie d'éjection est prévue dans la partie du manche (2) correspondant à la partie d'éjection en contact avec une extrémité du bloc (7) de façon à exercer une pression sur le bloc (7) et à le verrouiller dans la gorge (4) en basculant vers le bas et afin de libérer le bloc de façon à soulever l'extrémité concave (13) qui est raccordée à la paroi latérale de l'ouverture pour la partie d'éjection par le biais d'un pivot (16);
le dispositif élastique étant un ressort hélicoïdal.

2. Manche amovible selon la revendication 1, dans lequel une douille (14) correspondant au dispositif élastique est formée dans la surface inférieure de la cavité (5) et dans le bloc (7) afin de fixer le dispositif élastique.

3. Réceptacle de cuisson comportant un manche amovible, comprenant un corps (15) de réceptacle de cuisson, le manche amovible étant l'un quelconque des manches selon la revendication 1 ou la revendication 2.
